Europäisches Patentamt

European Patent Office

Office européen des brevets

(19)

(11) **EP 1 163 737 B1**

(12) **EUROPEAN PATENT SPECIFICATION**

(45) Date of publication and mention
of the grant of the patent:
**14.05.2003 Bulletin 2003/20**

(21) Application number: **00921419.8**

(22) Date of filing: **22.03.2000**

(51) Int Cl.$^7$: **H04B 7/005**

(86) International application number:
**PCT/US00/07476**

(87) International publication number:
**WO 00/057574 (28.09.2000 Gazette 2000/39)**

(54) **COMBINED CLOSED LOOP/OPEN LOOP POWER CONTROL IN A TIME DIVISION DUPLEX COMMUNICATION SYSTEM**

KOMBINIERTE LEISTUNGSREGELUNG MIT GESCHLOSSENER/OFFENER SCHLEIFE IN EINEM ZEITDUPLEX-KOMMUNIKATIONSSYSTEM

COMMANDE DE PUISSANCE COMBINEE A BOUCLE FERMEE/BOUCLE OUVERTE D'UN SYSTEME DE COMMUNICATION DUPLEX A REPARTITION DANS LE TEMPS

(84) Designated Contracting States:
**AT BE CH CY DE DK ES FI FR GB GR IE IT LI LU MC NL PT SE**

(30) Priority: **22.03.1999 US 125417 P**
**28.05.1999 US 136556 P**
**28.05.1999 US 136557 P**

(43) Date of publication of application:
**19.12.2001 Bulletin 2001/51**

(60) Divisional application:
**02026085.7**

(73) Proprietor: **INTERDIGITAL TECHNOLOGY CORPORATION**
**Wilmington, DE 19801 (US)**

(72) Inventors:
• **ZEIRA, Ariela**
**Trumball, CT 06611 (US)**
• **OZLUTURK, Fatih, M.**
**Port Washington, NY 11050 (US)**
• **SHIN, Sung-Hyuk**
**Fort Lee, NJ 07024 (US)**

(74) Representative: **Henningsson, Gunnar et al**
**AWAPATENT AB,**
**Box 45086**
**104 30 Stockholm (SE)**

(56) References cited:
**EP-A- 0 682 419**    **WO-A-97/49197**
**WO-A-98/45962**    **US-A- 5 542 111**
**US-A- 5 859 838**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND**

This invention generally relates to spread spectrum time division duplex (TDD) communication systems. More particularly, the present invention relates to a system and method for controlling transmission power within TDD communication systems.

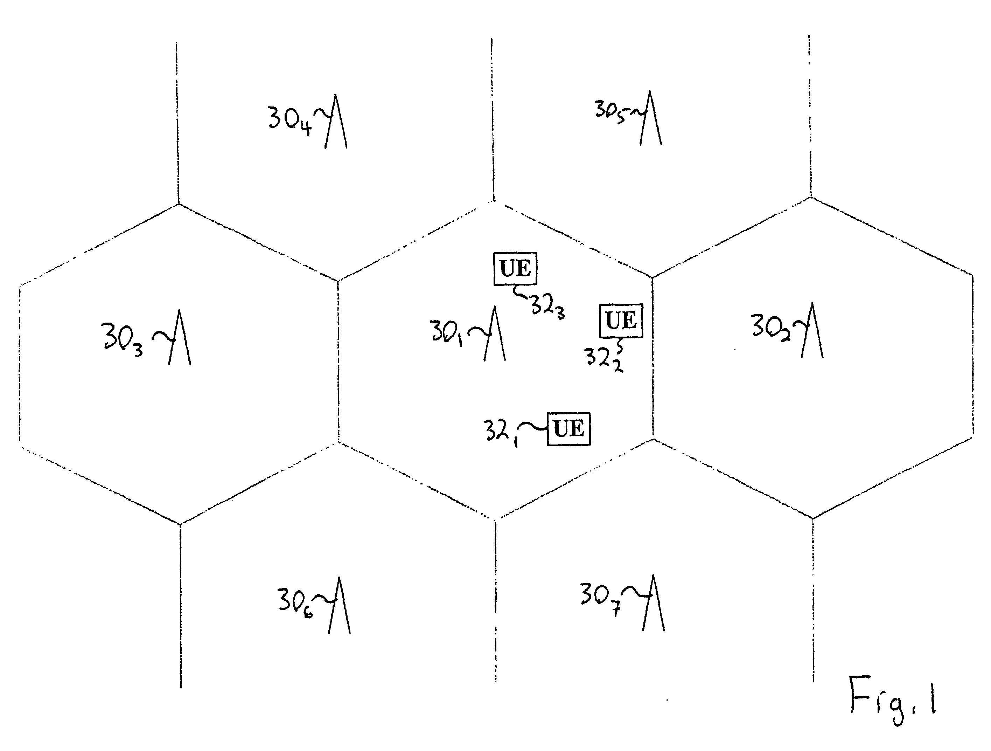

**Figure 1** depicts a wireless spread spectrum time division duplex (TDD) communication system. The system has a plurality of base stations $30_1$-$30_7$. Each base station $30_1$ communicates with user equipments (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

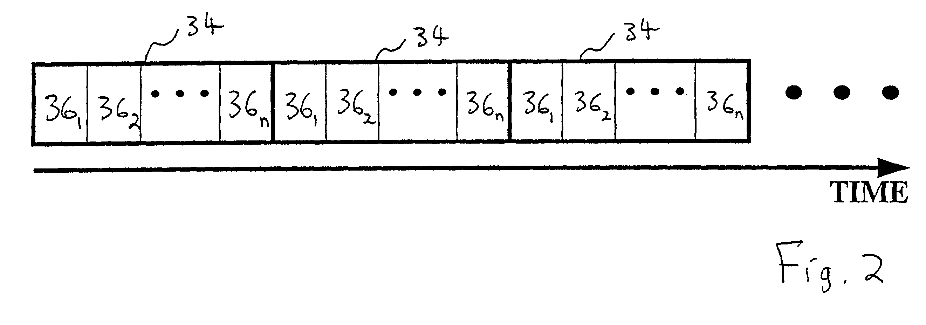

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as fifteen time slots. In such systems, a communication is sent in selected time slots $36_1$-$36_n$ using selected codes. Accordingly, one frame **34** is capable of carrying multiple communications distinguished by both time slot $36_1$-$36_n$ and code. The combination of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach to control transmission power levels is open loop power control. In open loop power control, typically a base station $30_1$ transmits to a UE $32_1$ a reference downlink communication and the transmission power level of that communication. The UE $32_1$ receives the reference communication and measures its received power level. By subtracting the received power level from the transmission power level, a pathloss for the reference communication is determined. To determine a transmission power level for the uplink, the downlink pathloss is added to a desired received power level at the base station $30_1$. The UE's transmission power level is set to the determined uplink transmission power level.

Another approach to control transmission power level is closed loop power control. In closed loop power control, typically the base station $30_1$ determines the signal to interference ratio (SIR) of a communication received from the UE $32_1$. The determined SIR is compared to a target SIR ($SIR_{TARGET}$). Based on the comparison, the base station $30_1$ transmits a power command, $b_{TPC}$. After receiving the power command, the UE $32_1$ increases or decreases its transmission power level based on the received power command.

Both closed loop and open loop power control have disadvantages. Under certain conditions, the performance of closed loop systems degrades. For instance, if communications sent between a UE and a base station are in a highly dynamic environment, such as due to the UE moving, such systems may not be able to adapt fast enough to compensate for the changes. The update rate of closed loop power control in TDD is 100 cycles per second which is not sufficient for fast fading channels. Open loop power control is sensitive to uncertainties in the uplink and downlink gain chains and interference levels.

One approach to combining closed loop and open loop power control was proposed by the Association of Radio Industries and Business CARIB) and uses **Equations 1, 2, and 3.**

$$T_{UE} = P_{BS}(n) + L \qquad \text{Equation 1}$$

$$P_{BS}(n) = P_{BS}(n-1) + b_{TPC}\, \Delta_{TPC} \qquad \text{Equation 2}$$

$$b_{TPC} = \begin{cases} 1: \text{if } SIR_{BS} < SIR_{TARGET} \\ -1: \text{if } SIR_{BS} > SIR_{TARGET} \end{cases}$$

**Equation 3**

$T_{UE}$ is the determined transmission power level of the UE $32_1$. L is the estimated downlink pathloss. $P_{BS}(n)$ is the desired received power level of the base station $30_1$ as adjusted by **Equation 2**. For each received power command, $b_{TPC}$, the desired received power level is increased or decreased by $\Delta_{TPC}$. $\Delta_{TPC}$ is typically one decibel (dB). The power command, $b_{TPC}$, is one, when the SIR of the UE's uplink communication as measured at the base station **30**, $SIR_{BS}$, is less than a target SIR, $SIR_{TARGET}$. Conversely, the power command is minus one, when $SIR_{BS}$ is larger than $SIR_{TARGET}$.

Under certain conditions, the performance of these systems degrades. For instance, if communications sent between a UE **32** and a base station **30** are in a highly dynamic environment, such as due to the UE **32** moving, the path loss estimate for open loop severely degrades the overall system's performance.

WO 97/49197 disclosures a GSM system for power control of packet switched data. The power control system uses an open loop aspect and a closed loop aspect The open loop aspect is an open loop variable Si (ti), where ti is the time of the last open loop update. The closed loop aspect is a closed loop variable Sc (tc) determined from received acknowledgment packets, where tc is the time of the last closed loop update. The transmission power of a power controlled transmittal is determined by:

$$S(t) = Si(ti) + (Sc(tc)-Si(ti))*e^{-\alpha(t-tc)}$$

$\alpha$ is a positive parameter.

Accordingly, there is a need for alternate approaches to maintain signal quality and low transmission power levels for all environments and scenarios.

**SUMMARY**

Combined closed loop/open loop power control controls transmission power. levels in a spread spectrum time division duplex communication station. A first communication station receives communications from a second communication station. The first station transmits power commands based on in part a reception quality of the received communications. The first station transmits a first communication having a transmission power level in a first time slot. The second station receives the first communication and the power commands. A power level of the first communication as received is measured. A path loss estimate is determined based on in part the measured received second communication power level and the first communication transmission power level. The second station transmits a second communication to the first station in a second time slot. The second communication transmission power level is set based on in part the path loss estimate weighted by a factor and the power commands. The factor is a function of a time separation of the first and second time slots and decreases as the number of time slots between the first and second time slots increases.

**BRIEF DESCRIPTION OF THE DRAWINGS**

**Figure 1** illustrates a prior art TDD system.
**Figure 2** illustrates time slots in repeating frames of a TDD system.
**Figure 3** is a flow chart of combine closed loop/open loop power control.
**Figure 4** is a diagram of components of two communication stations using combined closed loop/open loop power control.
**Figures 5-10** depict graphs of the performance of a closed loop, ARIB's proposal and two (2) schemes of combined closed loop/open loop power control.

**DETAILED DESCRIPTION OF THE PREFERRED EMBODIMENTS**

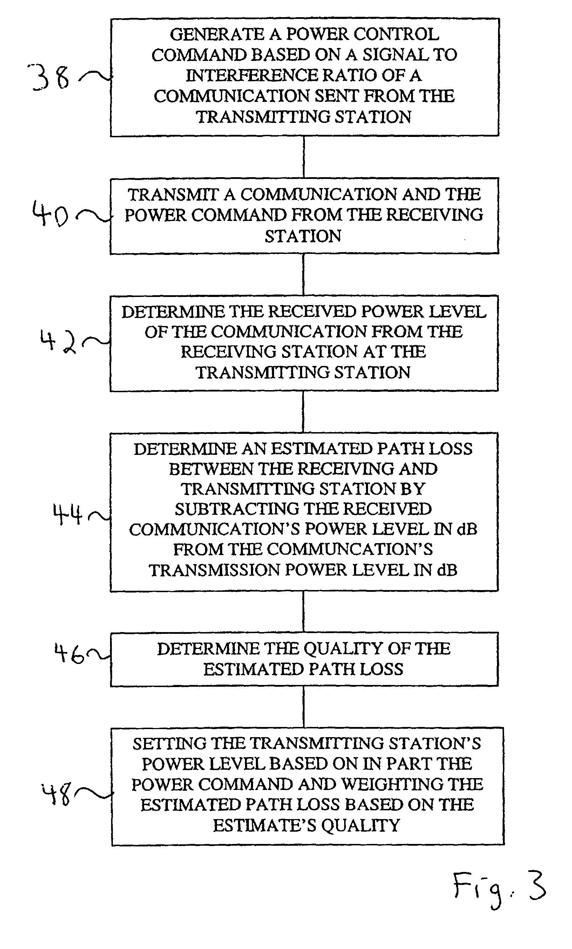

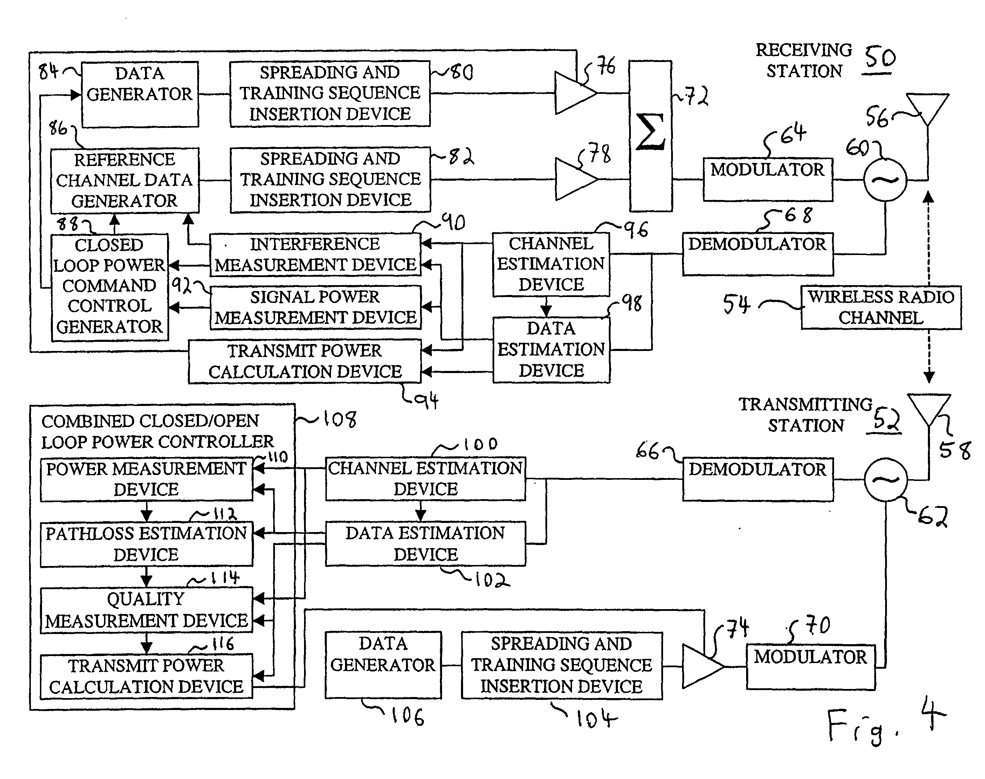

The preferred embodiments will be described with reference to the drawing figures where like numerals represent like elements throughout. Combined closed loop/open loop power control will be explained using the flow chart of **Figure 3** and the components of two simplified communication stations **50, 52** as shown in **Figure 4**. For the following discussion, the communication station having its transmitter's power controlled is referred to as the transmitting station **52** and the communication station receiving power controlled communications is referred to as the receiving station **50**. Since combined closed loop/open loop power control may be used for uplink, downlink or both types of communications, the transmitter having its power controlled may be located at a base station $30_1$, UE $32_1$ or both. Accordingly, if both uplink and downlink power control are used, the receiving and transmitting station's components are located at both the base station $30_1$ and UE $32_1$.

The receiving station **50** receives various radio frequency signals including communications from the transmitting station **52** using an antenna **56**, or alternately, an antenna array. The received signals are passed through an isolator **60** to a demodulator **68** to produce a baseband signal. The baseband signal is processed, such as by a channel estimation device **96** and a data estimation device **98**, in the time slots and with the appropriate codes assigned to the transmitting station's communication. The channel estimation device **96** commonly uses the training sequence component in the baseband signal to provide channel information, such as channel impulse responses. The channel information is used by the data estimation device **98**, the interference measurement device **90**, the signal power measurement device **92** and the transmit power calculation device **94**. The data estimation device **98** recovers data from the channel by estimating soft symbols using the channel information. Using the soft symbols and channel information, the transmit power calculation device **94** controls the receiving station's transmission power level by controlling the gain of an amplifier **76**.

The signal power measurement device **92** uses either the soft symbols or the channel information, or both, to determine the received signal power of the communication in decibels (dB). The interference measurement device **90** determines the interference level in dB, $I_{RS}$, within the channel, based on either the channel information, or the soft symbols generated by the data estimation device **102**, or both.

The closed loop power command generator **88** uses the measured communication's received power level and the interference level, $I_{RS}$, to determine the Signal to Interference Ratio (SIR) of the received communication. Based on a comparison of the determined SIR with a target SIR ($SIR_{TARGET}$), a closed loop power command is generated, $b_{TPC}$, such as a power command bit, $b_{TPC}$, **step 38.** Alternately, the power command may be based on any quality measurement of the received signal.

For use in estimating the path loss between the receiving and transmitting stations **50, 52** and sending data, the receiving station **50** sends a communication to the transmitting station **58, step 40**. The communication may be sent on any one of various channels. Typically, in a TDD system, the channels used for estimating path loss are referred to as reference channels, although other channels may be used. If the receiving station **50** is a base station $30_1$, the communication is preferably sent over a downlink common channel or a common control physical channel (CCPCH). Data to be communicated to the transmitting station **52** over the reference channel is referred to as reference channel data. The reference data may include, as shown, the interference level, $I_{RS}$, multiplexed with other reference data, such as the transmission power level of the reference channel, $T_{RS}$. The interference level, $I_{RS}$, and reference channel power level, $T_{RS}$, may be sent in other channels, such as a signaling channel, **step 40.** The closed loop power control command, $b_{TPC}$, is typically sent in a dedicated channel, dedicated to the communication between the receiving station **50** and transmitting station **52**.

The reference channel data is generated by a reference channel data generator **86**. The reference data is assigned one or multiple resource units based on the communication's bandwidth requirements. A spreading and training sequence insertion device **82** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **78**. The amplified communication burst may be summed by a sum device **72** with any other communication burst created through devices, such as a data generator **84**, spreading and training sequence insertion device **80** and amplifier **76**.

The summed communication bursts are modulated by a modulator **64**. The modulated signal is passed through an isolator **60** and radiated by an antenna **56** as shown or, alternately, through an antenna array. The radiated signal is passed through a wireless radio channel **54** to an antenna **58** of the transmitting station **52**. The type of modulation used for the transmitted communication can be any of the those known to those skilled in the art, such as direct phase shift keying (DPSK) or quadrature phase shift keying (QPSK).

The antenna **58** or, alternately, antenna array of the transmitting station **52** receives various radio frequency signals. The received signals are passed through an isolator **62** to a demodulator **66** to produce a baseband signal. The baseband signal is processed, such as by a channel estimation device **100** and a data estimation device **102**, in the time slots and with the appropriate codes assigned to the communication burst of the receiving station **50**. The channel estimation device **100** commonly uses the training sequence component in the baseband signal to provide channel information, such as channel impulse responses. The channel information is used by the data estimation device **102** and a power measurement device **110**.

The power level of the processed communication corresponding to the reference channel, $R_{TS}$, is measured by the power measurement device **110** and sent to a pathloss estimation device **112, step 42**. Both the channel estimation device **100** and the data estimation device **102** are capable of separating the reference channel from all other channels. If an automatic gain control device or amplifier is used for processing the received signals, the measured power level is adjusted to correct for the gain of these devices at either the power measurement device **110** or the pathloss estimation device **112**. The power measurement device **110** is a component of the combined closed loop/ open loop controller **108**. As illustrated in **Figure 4**, the combined closed loop/open loop power controller **108** consists of the power measurement device **110**, pathloss estimation device **112**, quality measurement device **114**, and transmit power calculation device **116**.

To determine the path loss, L, the transmitting station **52** also requires the communication's transmitted power level, $T_{RS}$. The transmitted power level, $T_{RS}$, may be sent along with the communication's data or in a signaling channel. If the power level, $T_{RS}$, is sent along with the communication's data, the data estimation device **102** interprets the power level and sends the interpreted power level to the pathloss estimation device **112.** If the receiving station **50** is a base station **30₁**, preferably the transmitted power level, $T_{RS}$, is sent via the broadcast channel (BCH) from the base station **30₁**. By subtracting the received communication's power level, $R_{TS}$ in dB, from the sent communication's transmitted power level, $T_{RS}$ in dB, the pathloss estimation device **112** estimates the path loss, L, between the two stations **50, 52, step 42**. In certain situations, instead of transmitting the transmitted power level, $T_{RS}$, the receiving station **50** may transmit a reference for the transmitted power level. In that case, the pathloss estimation device **112** provides reference levels for the path loss, L.

If a time delay exists between the estimated path loss and the transmitted communication, the path loss experienced by the transmitted communication may differ from the calculated loss. In TDD systems where communications are sent in differing time slots **36₁-36ₙ**, the time slot delay between received and transmitted communications may degrade the performance of an open loop power control system. Combined closed loop/open loop power control utilizes both closed loop and open loop power control aspects. If the quality of the path loss measurement is high, the system primarily acts as an open loop system. If the quality of the path loss measurement is low, the system primarily acts as a closed loop system. To combine the two power control aspects, the system weights the open loop aspect based on the quality of the path loss measurement.

A quality measurement device **114** in a weighted open loop power controller **108** determines the quality of the estimated path loss, **step 46**. The quality may be determined using the channel information generated by the channel estimation device **100**, the soft symbols generated by the data estimation device **102** or other quality measurement techniques. The estimated path loss quality is used to weight the path loss estimate by the transmit power calculation device **116.** If the power command, $b_{TPC}$, was sent in the communication's data, the data estimation device **102** interprets the closed loop power command, $b_{TPC}$. Using the closed loop power command, $b_{TPC}$, and the weighted path loss, the transmit power calculation device **116** sets the transmit power level of the receiving station **50, step 48**.

The following is one of the preferred combined closed loop/open loop power control algorithms. The transmitting station's power level in decibels, $P_{TS}$, is determined using **Equations 4** and **6**.

$$P_{TS} = P_0 + G(n) + \alpha L \qquad \text{Equation 4}$$

$P_0$ is the power level that the receiving station **50** desires to receive the transmitting station's communication in dB. $P_0$ is determined by the desired SIR at the receiving station **50**, $SIR_{TARGET}$, and the interference level, $I_{RS}$, at the receiving station **50** using **Equation 5**.

$$P_0 = SIR_{TARGET} + I_{RS} \qquad \text{Equation 5}$$

$I_{RS}$ is either signaled or broadcasted from the receiving station **50** to the transmitting station **52**. For downlink power control, $SIR_{TARGET}$ is known at the transmitting station 52. For uplink power control, $SIR_{TARGET}$ is signaled from the receiving station **50** to the transmitting station **52**. G(n) is the closed loop power control factor. **Equation 6** is one equation for determining G(n).

$$G(n) = G(n-1) + b_{TPC} \, \Delta_{TPC} \qquad \text{Equation 6}$$

G(n-1) is the previous closed loop power control factor. The power command, $b_{TPC}$, for use in **Equation 6** is either +1 or -1. One technique for determining the power command, $b_{TPC}$, is **Equation 3**. The power command, $b_{TPC}$,

is typically updated at a rate of 100 ms in a TDD system, although other update rates may be used. $\Delta_{TPC}$ is the change in power level. The change in power level is typically 1 dB although other values may be used. As a result, the closed loop factor increases by 1 dB if $b_{TPC}$ is +1 and decreases by 1 dB if $b_{TPC}$ is -1.

The weighting value, $\alpha$, is determined by the quality measurement device **114**. $\alpha$ is a measure of the quality of the estimated path loss and is, preferably, based on the number of time slots, D, between the time slot of the last path loss estimate and the first time slot of the communication transmitted by the transmitting station **52**. The value of $\alpha$ is from zero to one. Generally, if the time difference, D, between the time slots is small, the recent path loss estimate will be fairly accurate and $\alpha$ is set at a value close to one. By contrast, if the time difference is large, the path loss estimate may not be accurate and the closed loop aspect is most likely more accurate. Accordingly, $\alpha$ is set at a value closer to zero.

**Equation 7** is one equation for determining $\alpha$, although others may be used.

$$\alpha = 1 - (D - 1)/D_{max} \qquad \text{Equation 7}$$

$D_{max}$ is the maximum possible delay. A typical value for a frame having fifteen time slots is six. If the delay is $D_{max}$ or greater, $\alpha$ approaches zero. Using the calculated transmit power level, $P_{TS}$, determined by a transmit power calculation device **116**, the combined closed loop/open loop power controller **108** sets the transmit power of the transmitted communication.

Data to be transmitted in a communication from the transmitting station **52** is produced by a data generator **106**. The communication data is spread and time-multiplexed with a training sequence by the spreading and training sequence insertion device **104** in the appropriate time slots and codes of the assigned resource units producing a communication burst. The spread signal is amplified by the amplifier **74** and modulated by the modulator **70** to radio frequency.

The combined closed loop/open loop power controller **108** controls the gain of the amplifier **74** to achieve the determined transmit power level, $P_{TS}$, for the communication. The power controlled communication is passed through the isolator **62** and radiated by the antenna **58**.

**Equations 8** and **9** are another preferred combined closed loop/open loop power control algorithm.

$$P_{TS} = P_0 + K(n) \qquad \text{Equation 8}$$

$$K(n) = K(n-1) + b_{TPC}\, \Delta_{TPC} + \alpha L \qquad \text{Equation 9}$$

$K(n)$ is the combined closed loop/open loop factor. As shown, this factor includes both the closed loop and open loop power control aspects. **Equations 4** and **5** segregate the two aspects.

Although the two above algorithms only weighted the open loop factor, the weighting may be applied to the closed loop factor or both the open and closed loop factors.

**Figures 5-10** depict graphs illustrating the performance of a combined closed-loop/open-loop power control system. These graphs depict the results of simulations comparing the performance of the ARIB proposed system, a closed loop, a combined open loop/closed loop system using **Equations 4** and **6** (scheme I) and a combined system using **Equations 8** and **9** (scheme II). The simulations were performed at the symbol rate. A spreading factor of sixteen was used for both the uplink and downlink channels. The uplink and downlink channels are International Telecommunication Union (ITU) Channel model [ITU-R M.1225, vehicular, type B]. Additive noises were simulated as being independent of white Gaussian noises with unity variance. The path loss is estimated at the transmitting station **52** which is a UE **32₁** and in particular a mobile station. The BCH channel was used for the path loss estimate. The path loss was estimated two times per frame at a rate of 200 cycles per second. The receiving station **50**, which was a base station **30₁**, sent the BCH transmission power level over the BCH. RAKE combining was used for both the UE **32₁** and base station **30₁**. Antenna diversity combining was used at the base station **30₁**.

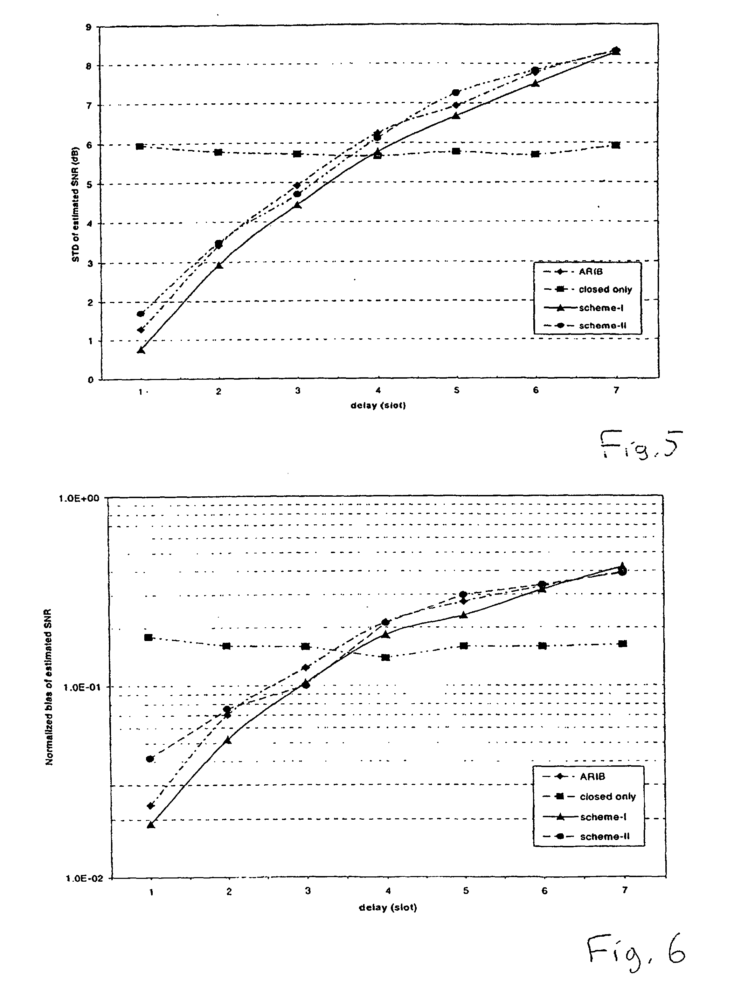

Figures 5, 7 and 9 depict the standard deviation of the received signal to noise ratio (SNR) at the base station **30₁** of the UE's power controlled communication as a function of the time slot delay, D. Figures 6, 8 and 10 depict the normalized bias of the received SNR as a function of the delay, D. The normalization was performed with respect to the desired SNR. Each point in the graphs represents the average of 3000 Monte-Carlo runs.

Figures 5 and 6 depict the results for an $\alpha$ set at one. For low time slot delays (D<4), scheme I and II outperform closed loop power control. For larger delays (D≥4), closed loop outperforms both scheme I and II which demonstrates the importance of weighting the open loop and closed loop aspects.

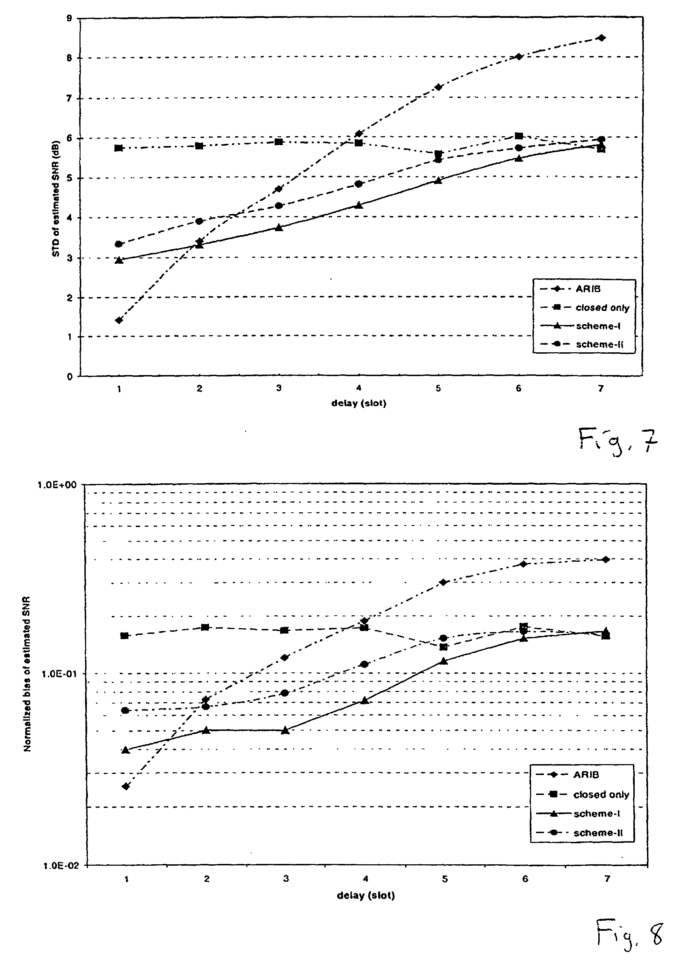

Figures 7 and 8 depict the results for an $\alpha$ set at 0.5. As shown, for all delays excluding the maximum, schemes I and II outperform closed loop power control. The ARIB proposal only outperforms the others at the lowest delay (D=1).

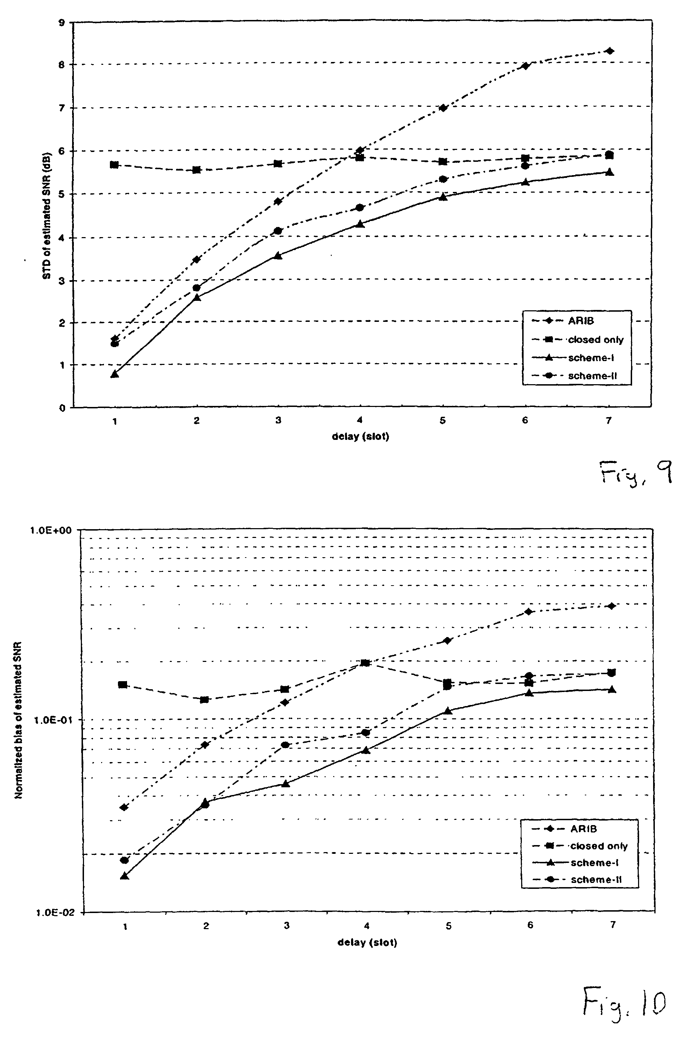

Figures 9 and 10 depict the results for an $\alpha$ set using **Equation 7** with $D_{max}$ equal to six. As shown, schemes I and II outperform both closed loop and the ARIB proposal at all delays, D.

## Claims

1. A method for controlling transmission power levels in a spread spectrum time division duplex communication system having frames with time slots for communication, a first communication station receiving communications from a second communication station and transmitting from the first station power commands based on in part a reception quality of the received communications (38, 40), the first communication station transmitting a first communication having a transmission power level in a first time slot (40), the second communication station receiving the first communication and the power commands, a power level of the first communication as received is measured (42), a pathloss estimate is determined based on in part the measured received first communication power level and the first communication transmission power level (44), the method **characterized by**:

   setting a transmission power level for a second communication in a second time slot from the second station to the first station based on in part the pathloss estimate weighted by a quality factor and the power commands (48), wherein the quality factor decreases as the number of time slots between the first and second time slots increases.

2. The method of claim 1 further **characterized by** comprising:

   determining the quality factor, $\alpha$, of the pathloss estimate (46) based on in part a number of time slots, D, between the first and second time slot.

3. The method of claim 2 wherein a maximum time slot delay is $D_{max}$ and the determined quality factor, $\alpha$, is determined by

$$\alpha = 1 - (D-1)/D_{max}.$$

4. The method of claim 1 wherein the set transmission power level is based on in part a desired received power level at the first station, a closed loop factor and an open loop factor; wherein the closed loop factor is based on in part the received power commands and the open loop factor is based on in part the pathloss estimate weighted by the quality factor.

5. The method of claim 1 wherein the set transmission power level is based on in part a desired received power level at the first station and a combined closed loop/open loop factor; wherein the combined closed loop/open loop factor is based on in part the received power commands and the pathloss estimate weighted by the quality factor.

6. The method of claim 4 wherein the closed loop factor is updated for each received power command.

7. The method of claim 5 wherein the combined factor is updated for each received power command.

8. The method of claim 4 wherein the desired received power level is based on in part a target signal to interference ratio and a measured interference level at the first station.

9. The method of claim 5 wherein the desired received power level is based on in part a target signal to interference ratio and a measured interference level at the first station.

10. The method of claim 1 wherein the first station is a base station and the second station is a user equipment.

11. The method of claim 1 wherein the first station is a user equipment and the second station is a base station.

12. A spread spectrum time division duplex communication systemhaving a first (50) and second (52) communication station, the system using frames with time slots for communication, the first station (50) receiving communications from the second communication station (52) and transmitting power commands based on in part a reception quality of the received communications, and transmitting a first communication having a transmission power level in a first time slot, the second station (52) receiving the first communication and the power commands, measuring a power level of the first communication as received, and determining a pathloss estimate based on in part the measured received first communication power level and the first communication transmission power level, the system **characterized by**:

the second station (52) comprising:

means (108) for setting a transmission power level for a second communication in a second time slot from the second station to the first station based on in part the pathloss estimate weighted by a quality factor and the power commands, wherein the quality factor decreases as the number of time slots between the first and second time slots increases.

**13.** The system of claim 12 wherein:

the second station (52) further comprises means for determining the quality factor, $\alpha$, of the pathloss estimate based on in part a number of time slots, D, between the first and second time slot.

**14.** The system of claim 13 wherein a maximum time slot delay is $D_{max}$ and the determined quality factor, $\alpha$, is determined by

$$\alpha = 1 - (D-1)/D_{max}.$$

**15.** The system of claim 12 wherein the setting means (108) sets the transmission power level based on in part a desired received power level at the first station (50), a closed loop factor and an open loop factor, the closed loop factor is based on in part the received power commands and the open loop factor is based on in part the pathloss estimate weighted by the quality factor.

**16.** The system of claim 12 wherein the setting means (108) sets the transmission power level based on in part a desired received power level at the first station (50) and a combined closed loop/open loop factor, the combined closed loop/open loop factor is based on in part the received power commands and the path loss estimate weighted by the quality factor.

**17.** The system of claim 15 wherein the closed loop factor is updated for each received power command.

**18.** The system of claim 16 wherein the combined factor is updated for each received power command.

**19.** The system of claim 15 wherein the desired received power level is based on in part a target signal to interference ratio and a measured interference level at the first station (50).

**20.** The system of claim 16 wherein the desired received power level is based on in part a target signal to interference ratio and a measured interference level at the first station (50).

**21.** The system of claim 12 wherein the first station (50) is a base station (30) and the second station (52) is a user equipment (32).

**22.** The system of claim 12 wherein the first station (50) is a user equipment (32) and the second station (52) is a base station (30).

**23.** A communication station (52) having its transmission power level controlled in a spread spectrum time division duplex communication system, the system using frames with time slots for communication and having a second communication station (50) transmitting a first communication in a first time slot and power commands, the communication station comprising: at least one antenna (58) for receiving the first communication and the power commands and transmitting an amplified second communication in a second time slot, a channel estimation device (100) having an input configured to receive the received first communication for producing channel information, a data estimation device (102) having inputs configured to receive the received first communication, the power commands and the channel information for producing soft symbols and recovering the power commands, and a power measurement device (110) having an input configured to receive the channel information for producing a measurement of a received power level for producing a pathloss estimate for the first communication based on in part the measured received power level and a transmission power level of the first communication, and an amplifier (74) having inputs configured to receive a power control signal and a second communication to be transmitted in a second time slot for amplifying the second communication in response to the power control signal to produce the amplified second communication, the communication station **characterized by** comprising:

a quality measurement device (114) for producing a quality measurement based at least in part upon the number of time slots between the first time slot and a second time slot , the value of the quality measurement decreasing as this number increases; and

a transmit power calculation device (116) having inputs configured to receive the pathloss estimation, the recovered power commands and the quality measurement for producing the power control signal based on in part the pathloss estimate weighted by the quality measurement and the recovered power commands.

## Patentansprüche

1. Verfahren zum Steuern von Sendeleistungspegeln in einem Spreizspektrums-Zeitduplex-Kommunikationssystem, das Rahmen mit Zeitschlitzen zur Kommunikation aufweist, wobei eine erste Kommunikationsstation Kommunikationen von einer zweiten Kommunikationsstation empfängt und von der ersten Station teilweise auf der Grundlage einer Empfangsqualität der empfangenen Kommunikationen (38, 40) Leistungsbefehle sendet, wobei die erste Kommunikationsstation eine erste Kommunikation mit einem Sendeleistungspegel in einem ersten Zeitschlitz (40) sendet, wobei die zweite Kommunikationsstation die erste Kommunikation und die Leistungsbefehle empfängt, wobei ein Leistungspegel der ersten Kommunikation bei ihrem Empfang gemessen wird (42), eine Pfadverlustschätzung wird teilweise auf der Grundlage des gemessenen empfangenen ersten Kommunikations-Leistungspegels und des ersten Kommunikations-Sendeleistungspegels (44) bestimmt, wobei das Verfahren **gekennzeichnet ist durch**:

   - Setzen eines Sendeleistungspegels für eine zweite Kommunikation in einem zweiten Zeitschlitz von der zweiten Station an die erste Station teilweise auf der Grundlage der **durch** einen Qualitätsfaktor und die Leistungsbefehle (48) gewichteten Pfadverlustschätzung, wobei der Qualitätsfaktor kleiner wird, wenn die Anzahl von Zeitschlitzen zwischen dem ersten und dem zweiten Zeitschlitz größer wird.

2. Verfahren nach Anspruch 1, weiter **gekennzeichnet durch**:

   - Bestimmen des Qualitätsfaktors $\alpha$ der Pfadverlustschätzung (46) teilweise auf der Grundlage einer Anzahl von Zeitschlitzen D zwischen dem ersten und dem zweiten Zeitschlitz.

3. Verfahren nach Anspruch 2, bei dem eine maximale Zeitschlitzverzögerung $D_{max}$ ist und der bestimmte Qualitätsfaktor $\alpha$ durch folgende Formel bestimmt wird:

$$\alpha = 1 \cdot (D\text{-}1) / D_{max}.$$

4. Verfahren nach Anspruch 1, bei dem der gesetzte Sendeleistungspegel teilweise auf einem erwünschten Empfangsleistungspegel an der ersten Station, einem Regelungsfaktor und einem Steuerungsfaktor beruht; wobei der Regelungsfaktor teilweise auf den empfangenen Leistungsbefehlen beruht und der Steuerungsfaktor teilweise auf der durch den Qualitätsfaktor gewichteten Pfadverlustschätzung beruht.

5. Verfahren nach Anspruch 1, bei dem der gesetzte Sendeleistungspegel teilweise auf einem erwünschten Empfangsleistungspegels an der ersten Station und einem kombinierten Regelungs-/Steuerungs-Faktor beruht; wobei der kombinierte Regelungs-/Steuerungs-Faktor teilweise auf den empfangenen Leistungsbefehlen und der durch den Qualitätsfaktor gewichteten Pfadverlustschätzung beruht.

6. Verfahren nach Anspruch 4, bei dem der Regelungsfaktor für jeden empfangenen Leistungsbefehl aktualisiert wird.

7. Verfahren nach Anspruch 5, bei dem der kombinierte Faktor für jeden empfangenen Leistungsbefehl aktualisiert wird.

8. Verfahren nach Anspruch 4, bei dem der erwünschte empfangene Leistungspegel teilweise auf einem Ziel-Störabstand und einem an der ersten Station gemessenen Störpegel beruht.

9. Verfahren nach Anspruch 5, bei dem der erwünschte empfangene Leistungspegel teilweise auf einem Ziel-Störabstand und einem an der ersten Station gemessenen Störpegel beruht.

10. Verfahren nach Anspruch 1, bei dem die erste Station eine Basisstation und die zweite Station ein Benutzergerät ist.

11. Verfahren nach Anspruch 1, bei dem die erste Station ein Benutzergerät und die zweite Station eine Basisstation ist.

12. Spreizspektrums-Zeitduplex-Kommunikationssystem mit einer ersten (50) und einer zweiten (52) Kommunikationsstation, wobei das System Rahmen mit Zeitschlitzen zur Kommunikation verwendet, wobei die erste Station (50) Kommunikationen von der zweiten Kommunikationsstation (52) empfängt und teilweise auf der Grundlage einer Empfangsqualität der empfangenen Kommunikationen Leistungsbefehle sendet und eine erste Kommunikation mit einem ersten Sendeleistungspegel in einem ersten Zeitschlitz sendet, wobei die zweite Station (52) die erste Kommunikation und die Leistungsbefehle empfängt, wobei ein Leistungspegel der ersten Kommunikation bei ihrem Empfang gemessen wird und eine Pfadverlustschätzung teilweise auf der Grundlage des gemessenen empfangenen ersten Kommunikationsleistungspegels und des ersten Kommunikations-Sendeleistungspegels bestimmt wird, wobei das System **dadurch gekennzeichnet ist, dass**:

   - die zweite Station (52) aufweist:

      - eine Einrichtung (108) zum Setzen eines Sendeleistungspegels für eine zweite Kommunikation in einem zweiten Zeitschlitz von der zweiten Station an die erste Station teilweise auf der Grundlage der durch einen Qualitätsfaktor und die Leistungsbefehle gewichteten Pfadverlustschätzung, wobei der Qualitätsfaktor kleiner wird, wenn die Anzahl von Zeitschlitzen zwischen dem ersten und dem zweiten Zeitschlitz größer wird.

13. System nach Anspruch 12, bei dem:

   - die zweite Station (52) weiter eine Einrichtung zum Bestimmen des Qualitätsfaktors $\alpha$ des Pfadverlusts teilweise auf der Grundlage einer Anzahl von Zeitschlitzen D zwischen dem ersten und dem zweiten Zeitschlitz aufweist.

14. System nach Anspruch 13, bei dem eine maximale Zeitschlitzverzögerung $D_{max}$ ist und der bestimmte Qualitätsfaktor $\alpha$ durch die folgende Formel bestimmt wird:

$$\alpha = 1 \cdot (D\text{-}1)/D_{max}.$$

15. System nach Anspruch 12, bei dem die Setzeinrichtung (108) den Sendeleistungspegel teilweise auf der Grundlage des erwünschten Empfangsleistungspegels an der ersten Station (50), eines Regelungsfaktors und eines Steuerungsfaktors bestimmt, wobei der Regelungsfaktor teilweise auf den empfangenen Leistungsbefehlen beruht und der Steuerungsfaktor teilweise auf der durch den Qualitätsfaktor gewichteten Pfadverlustschätzung beruht.

16. System nach Anspruch 12, bei dem die Setzeinrichtung (108) den Sendeleistungspegel teilweise auf der Grundlage des erwünschten Empfangsleistungspegels an der ersten Station (50) und eines kombinierten Regelungs-/ Steuerungs-Faktors bestimmt, wobei der kombinierte Regelungs-/ Steuerungs-Faktor teilweise auf den empfangenen Leistungsbefehlen und der durch den Qualitätsfaktor gewichteten Pfadverlustschätzung beruht.

17. System nach Anspruch 15, bei dem der Regelungsfaktor für jeden empfangenen Leistungsbefehl aktualisiert wird.

18. System nach Anspruch 16, bei dem der kombinierte Faktor für jeden empfangenen Leistungsbefehl aktualisiert wird.

19. System nach Anspruch 15, bei dem der erwünschte empfangene Leistungspegel teilweise auf einem Ziel-Störabstand und einem an der ersten Station (50) gemessenen Störpegel beruht.

**20.** System nach Anspruch 16, bei dem der erwünschte empfangene Leistungspegel teilweise auf einem Ziel-Störabstand und einem an der ersten Station (50) gemessenen Störpegel beruht.

**21.** System nach Anspruch 12, bei dem die erste Station (50) eine Basisstation (30) ist und die zweite Station (52) ein Benutzergerät (32) ist.

**22.** System nach Anspruch 12, bei dem die erste Station (50) ein Benutzergerät (32) ist und die zweite Station (52) eine Basisstation (30) ist.

**23.** Kommunikationsstation (52), mit einem Sendeleistungspegel, der in einem Spreizspektrum-Zeitduplex-Kommunikationssystem gesteuert wird, wobei das System Rahmen mit Zeitschlitzen zur Kommunikation verwendet, und eine zweite Kommunikationsstation (50) aufweist, die eine erste Kommunikation in einem ersten Zeitschlitz und Leistungsbefehle sendet, wobei die Kommunikationsstation aufweist; mindestens eine Antenne (58) zum Empfangen der ersten Kommunikation und der Leistungsbefehle und zum Senden einer verstärkten zweiten Kommunikation in einem zweiten Zeitschlitz, eine Kanalschätzungsvorrichtung (100), deren Eingang zum Empfangen der empfangenen ersten Kommunikation zum Erzeugen von Kanalinformation konfiguriert ist, eine Datenschätzungsvorrichtung (102), deren Eingänge zum Empfangen der empfangenen ersten Kommunikation, der Leistungsbefehle und der Kanalinformation zum Erzeugen weicher Symbole und zum Wiederherstellen der Leistungsbefehle konfiguriert sind, und eine Leistungsmessvorrichtung (110), deren Eingang zum Empfangen der Kanalinformation zum Erzeugen einer Messung eines empfangenen Leistungspegels zum Erzeugen einer Pfadverlustschätzung für die erste Kommunikation teilweise auf der Grundlage des gemessenen empfangenen Leistungspegels und eines Sendeleistungspegels der ersten Kommunikation konfiguriert ist, und einen Verstärker (74), dessen Eingänge zum Empfangen eines Leistungssteuerungssignals und einer zweiten in einem zweiten Zeitschlitz zu sendenden Kommunikation zum Verstärken der zweiten Kommunikation in Reaktion auf das Leistungssteuerungssignal zum Erzeugen der verstärkten zweiten Kommunikation konfiguriert sind, wobei die Kommunikationsstation **dadurch gekennzeichnet ist, dass** sie aufweist:

- eine Qualitätsmessvorrichtung (114) zum Erzeugen einer Qualitätsmessung mindestens teilweise auf der Grundlage der Anzahl von Zeitschlitzen zwischen dem ersten Zeitschlitz und einem zweiten Zeitschlitz, wobei der Wert der Qualitätsmessung kleiner wird, wenn diese Anzahl größer wird; und
- eine Sendeleistungs-Berechnungsvorrichtung (116), deren Eingänge zum Empfangen der Pfadverlustschätzung, der wiederhergestellten Leistungsbefehle und der Qualitätsmessung zum Erzeugen des Leistungssteuerungssignals teilweise auf der Grundlage der durch die Qualitätsmessung und die wiederhergestellten Leistungsbefehle gewichteten Pfadverlustschätzung konfiguriert sind.

**Revendications**

**1.** Procédé permettant de commander les niveaux de puissance d'émission dans un système de télécommunications en duplex à division temporelle à étalement de spectre, possédant des trames ayant des tranches de temps de télécommunications, un premier poste de télécommunications recevant des communications de la part d'un deuxième poste de télécommunications et émettant, en provenance du premier poste, des instructions de puissance basées en partie sur la qualité de réception des communications reçues (38, 40), le premier poste de télécommunications émettant une première communication ayant un certain niveau de puissance d'émission dans une première tranche de temps (40), le deuxième poste de télécommunications recevant la première communication et les instructions de puissance, le niveau de puissance de la première communication telle que reçue étant mesuré (42), une estimation des pertes en ligne étant déterminée sur la base, en partie, du niveau de puissance mesuré de la première communication reçue et du niveau (44) de puissance d'émission de la première communication, le procédé étant **caractérisé par** l'opération suivante :

fixer un niveau de puissance d'émission pour une deuxième communication dans une deuxième tranche de temps, du deuxième poste au premier poste, sur la base, en partie, de l'estimation des pertes en ligne pondérée par un facteur de qualité et les instructions de puissance (48), où le facteur de qualité diminue lorsque le nombre de tranches de temps entre les première et deuxième tranches de temps augmente.

**2.** Procédé selon la revendication 1, **caractérisé en outre en ce qu'**il comprend l'opération suivante :

déterminer le facteur de qualité, $\alpha$, de l'estimation (46) des pertes en ligne sur la base, en partie, du nombre de tranches de temps, D, entre les première et deuxième tranches de temps.

3. Procédé selon la revendication 2, où le retard de tranches de temps maximal est $D_{max}$ et le facteur de qualité, $\alpha$, déterminé est donné par :

$$\alpha = 1- (D-1)/D_{max},$$

4. Procédé selon la revendication 1, où le niveau de puissance d'émission fixé est basé, en partie, sur le niveau de puissance reçu voulu dans le premier poste, un facteur de boucle fermée et un facteur de boucle ouverte, où le facteur de boucle fermée est basé, en partie, sur les instructions de puissance reçues et le facteur de boucle ouverte est basé, en partie, sur l'estimation des pertes en ligne pondérée par le facteur de qualité.

5. Procédé selon la revendication 1, où le niveau fixé de puissance d'émission est basé, en partie, sur le niveau de puissance reçu voulu dans le premier poste et un facteur combiné de boucle fermée/boucle ouverte, où le facteur combiné de boucle fermée/boucle ouverte est basé, en partie, sur les instructions de puissance reçues et l'estimation des pertes en ligne pondérée par le facteur de qualité.

6. Procédé selon la revendication 4, où le facteur de boucle fermée est mis à jour pour chaque instruction de puissance reçue.

7. Procédé selon la revendication 5, où le facteur combiné est mis à jour pour chaque instruction de puissance reçue.

8. Procédé selon la revendication 4, où le niveau de puissance reçu voulu est basé, en partie, sur le signal visé pour le taux d'interférences et le niveau d'interférences mesuré dans le premier poste.

9. Procédé selon la revendication 5, où le niveau de puissance reçu voulu est basé, en partie, sur le signal visé pour le taux d'interférences et le niveau d'interférences mesuré dans le premier poste.

10. Procédé selon la revendication 1, où le premier poste est une station de base et le deuxième poste est un équipement d'utilisateur.

11. Procédé selon la revendication 1, où le premier poste est un équipement d'utilisateur et le deuxième poste est une station de base.

12. Système de télécommunications en duplex à division temporelle à étalement de spectre, possédant un premier poste de télécommunications (50) et un deuxième poste de télécommunications (52), le système utilisant des trames ayant des tranches de temps pour les télécommunications, le premier poste (50) recevant des communications de la part du deuxième poste de télécommunications (52) et émettant des instructions de puissance basées, en partie, sur la qualité de réception des communications reçues, et émettant une première communication qui possède un certain niveau de puissance d'émission dans une première tranche de temps, le deuxième poste (52) recevant la première communication et les instructions de puissance, mesurant le niveau de puissance de la première communication telle que reçue, et déterminant l'estimation des pertes en ligne sur la base, en partie, du niveau de puissance mesuré de la première communication reçue et du niveau de puissance d'émission de la première communication, le système étant **caractérisé par le fait que** :

le deuxième poste (52) comprend un moyen (108) servant à fixer le niveau de puissance d'émission pour une deuxième communication dans une deuxième tranche de temps, du deuxième poste au premier poste, basé, en partie, sur l'estimation des pertes en ligne pondérée par un facteur de qualité et les instructions de puissance, où le facteur de qualité diminue lorsque le nombre de tranches de temps entre les première et deuxième tranches de temps augmente.

13. Système selon la revendication 12, où le deuxième poste (52) comprend en outre un moyen servant à déterminer le facteur de qualité, $\alpha$, de l'estimation des pertes en ligne sur la base, en partie, du nombre de tranches de temps, D, entre les première et deuxième tranches de temps.

14. Système selon la revendication 13, où le retard de tranches de temps maximal est $D_{max}$ et le facteur de qualité, $\alpha$, déterminé est donné par :

$$\alpha = 1 - (D\text{-}1)/D_{max},$$

**15.** Système selon la revendication 12, où le moyen de fixation (108) fixe le niveau de puissance d'émission sur la base, en partie, du niveau de puissance reçu voulu dans le premier poste (50), d'un facteur de boucle fermée et d'un facteur de boucle ouverte, le facteur de boucle fermée étant basé, en partie, sur les instructions de puissance reçues et le facteur de boucle ouverte étant basé, en partie, sur l'estimation des pertes en ligne pondérée par le facteur de qualité.

**16.** Système selon la revendication 12, où le moyen de fixation (108) fixe le niveau de puissance d'émission sur la base, en partie, du niveau voulu de puissance reçu dans le premier poste (50) et d'un facteur combiné de boucle fermée/boucle ouverte, le facteur combiné de boucle fermée/boucle ouverte étant basé, en partie, sur les instructions de puissance reçues et l'estimation des pertes en ligne pondérée par le facteur de qualité.

**17.** Système selon la revendication 15, où le facteur de boucle fermée est mis à jour pour chaque instruction de puissance reçue.

**18.** Système selon la revendication 16, où le facteur combiné est mis à jour pour chaque instruction de puissance reçue.

**19.** Système selon la revendication 15, où le niveau de puissance reçu voulu est basé, en partie, sur le signal visé pour le taux d'interférences et le niveau d'interférences mesuré dans le premier poste (50).

**20.** Système selon la revendication 16, où le niveau de puissance reçu voulu est basé, en partie, sur le signal visé pour le taux d'interférences et le niveau d'interférences mesuré dans le premier poste (50).

**21.** Système selon la revendication 12, où le premier poste (50) est une station de base (30) et le deuxième poste (52) est un équipement d'utilisateur (32).

**22.** Système selon la revendication 12, où le premier poste (50) est un équipement d'utilisateur (32) et le deuxième poste (52) est une station de base (30).

**23.** Poste de télécommunications (52) dont le niveau de puissance d'émission est commandé dans un système de télécommunications en duplex à division temporelle à étalement de spectre, le système utilisant des trames ayant des tranches de temps de télécommunications et comportant un deuxième poste de télécommunications (50) émettant une première communication dans une première tranche de temps et des instructions de puissance, le poste de télécommunications comprenant : au moins une antenne (58) servant à recevoir la première communication et les instructions de puissance et émettant une deuxième communication amplifiée dans une deuxième tranche de temps, un dispositif (100) d'estimation de canal qui possède une entrée configurée pour recevoir la première communication reçue afin de produire des informations relatives au canal, un dispositif (102) d'estimation de données comportant des entrées configurées pour recevoir la première communication reçue, les instructions de puissance et les informations relatives au canal afin de produire des symboles souples et de récupérer les instructions de puissance, et un dispositif (110) de mesure de puissance comportant une entrée configurée pour recevoir les informations relatives au canal afin de produire une mesure du niveau de puissance reçu et ainsi produire une estimation des pertes en ligne pour la première communication sur la base, en partie, du niveau de puissance reçu mesuré et du niveau de puissance d'émission de la première communication, et un amplificateur (74) possédant des entrées configurées pour recevoir un signal de commande de puissance et une deuxième communication devant être émise dans une deuxième tranche de temps afin d'amplifier la deuxième communication en réponse au signal de commande de puissance pour, ainsi, produire la deuxième communication amplifiée, le poste de télécommunications étant **caractérisé en ce qu'**il comprend :

un dispositif (114) de mesure de qualité servant à produire une mesure de qualité sur la base d'au moins, en partie, le nombre de tranches de temps entre la première tranche de temps et une deuxième tranche de temps, la valeur de la mesure de qualité diminuant lorsque ce nombre augmente ; et
un dispositif (116) de calcul de puissance d'émission comportant des entrées configurées pour recevoir l'estimation des pertes en ligne, les instructions de puissance récupérées et la mesure de qualité afin de produire le signal de commande de puissance sur la base, en partie, de l'estimation des pertes en ligne pondérée par la mesure de qualité et les instructions de puissance récupérées.

Fig. 1

Fig. 2

38 〜
GENERATE A POWER CONTROL COMMAND BASED ON A SIGNAL TO INTERFERENCE RATIO OF A COMMUNICATION SENT FROM THE TRANSMITTING STATION

40 〜
TRANSMIT A COMMUNICATION AND THE POWER COMMAND FROM THE RECEIVING STATION

42 〜
DETERMINE THE RECEIVED POWER LEVEL OF THE COMMUNICATION FROM THE RECEIVING STATION AT THE TRANSMITTING STATION

44 〜
DETERMINE AN ESTIMATED PATH LOSS BETWEEN THE RECEIVING AND TRANSMITTING STATION BY SUBTRACTING THE RECEIVED COMMUNICATION'S POWER LEVEL IN dB FROM THE COMMUNCATION'S TRANSMISSION POWER LEVEL IN dB

46 〜
DETERMINE THE QUALITY OF THE ESTIMATED PATH LOSS

48 〜
SETTING THE TRANSMITTING STATION'S POWER LEVEL BASED ON IN PART THE POWER COMMAND AND WEIGHTING THE ESTIMATED PATH LOSS BASED ON THE ESTIMATE'S QUALITY

Fig. 3

EP 1 163 737 B1

Fig. 4

17

Fig. 5

Fig. 6

Fig. 7

Fig. 8

Fig. 9

Fig. 10